# EUROPEAN PATENT SPECIFICATION

(11) **EP 1 301 422 B1**
(45) Date of publication and mention of the grant of the patent: **01.12.2004**
(21) Application number: 01945879.3
(22) Date of filing: 03.07.2001
(51) Int. Cl.: B65G 21/20

(54) **SLIDE RAIL DEVICE FOR A CONVEYOR**
GLEITSCHIENENVORRCIHTUNG FÜR FÖRDERER
GLISSIERE POUR TRANSPORTEUR

(30) Priority: 05.07.2000 SE 0002536
(43) Date of publication of application: 16.04.2003
(73) Proprietor: FlexLink Components AB, 415 50 Göteborg (SE)
(72) Inventor: ABBESTAM, Göran, S-433 41 Partille (SE); RUNDQVIST, Andreas, S-448 35 FLODA (SE)
(74) Representative: Graudums, Valdis
(86) International application number: PCT/SE2001/001524
(87) International publication number: WO 2002/002440

(56) References cited:
- EP-A1- 0 203 352

## Description

### TECHNICAL FIELD

The invention relates to a slide rail device for a conveyor and, more specifically, to a slide rail device for a conveyor having a continuous-running conveyor chain or equivalent.

### PRIOR ART

It has long been known to guide continuous conveyor chains in elements which are constructed as profiled elements and support and guide the chain. Such elements are usually extruded profiled girders and a choice of suitable material offers a wide degree of scope to produce purpose-built elements. One requirement which is stipulated is, of course, adequate strength and optimal extrudability. Aluminium and alloys of aluminium, but also other light metals, have been shown to meet stipulated requirements. By combining a profiled design which is acceptable from the strength aspect with a profile which is necessary for the particular chain guidance, it is possible to achieve a profiled design which is ideal for the purpose.

An essential requirement in this connection and which is placed upon extruded conveyor elements is, however, that they should produce minimal friction against the chain.

In published European patent application, publication No. 0 203 352 upon which the preamble of claim 1 is based, it is disclosed a slide plate attached by snapping means for fully covering the top off a girder.

Another traditionally used method involves the application of slide rails made of suitable material to supporting guides in profiled elements. Such a material is, for example, polyamide, HD polyethylene or UHW polyethylene.

Such rails are extruded in desired lengths and are cut to the part-lengths required for application to guides in profiled elements/girders and to any auxiliary guides in deflecting devices.

In the rails there is a longitudinal groove, the width of which is dimensioned to correspond essentially to the thickness of the guides/flanges to which a corresponding rail shall be applied by the rail being pressed onto the flange so as to enclose this on two sides.

The material in the rail, for example polyamide, HD polyethylene or UHW polyethylene, is such that the groove-forming arms of the rail can be swung out such that they return flexibly into position.

In order to be adaptable to any curves in the chain track of the conveyor, the rail and its arms must not be too flexurally rigid.

This means that the material properties of the rail and the width of the groove in the same cannot always be chosen to produce arms which exert a force upon the guide in the conveyor track, which force is as resilient as possible and fixes the rail.

Especially when the conveyor has a conveyor chain having links which enjoy considerable range of movement in the plane of the chain as well as in a plane perpendicularly thereto, there is a risk that the chain, because of its inherent and necessary freedom of movement between individual links, will tend not to follow the intended motional path if its guidance is not as intended.

The said slide rails make a large-scale contribution to such guidance.

The conveyor chain puts strain upon the slide rails, which are expected to be immovable under the intended load. Oblique load and oblique tension in the chain can arise, for example, due to the disorderliness of objects conveyed on the chain, especially in curves in the chain. In this connection, it is of great importance that the slide rails should maintain their intended position. Even a slight displacement of a slide rail from the correct position can result in braking or even jamming of the chain.

### OBJECT OF THE INVENTION

The object of the invention is to provide a conveyor having a continuous conveyor chain in which the abovementioned drawbacks of the known slide rails are eliminated.

The slide rail device is especially intended for use in conveyors having continuous conveyor chains running on slide rails and in which objects conveyed on the chain are actively guided in order, without disturbances, to give the conveyor chain the intended course of motion on the slide rails.

The slide rail device according to the invention is produced especially for conveyors in which the chain strands are supported and guided at a relatively short distance apart in extruded profiles and in which high requirements are placed upon tolerances, especially in terms of undisturbed guidance of the chain, including under difficult operating conditions.

### THE INVENTION

The said objects and aims of the invention are realized with a slide rail device according to that which is set out in Patent Claim 1.

In the sub-claims are indicated preferred embodiments of the arrangement according to the invention.

### BRIEF DESCRIPTION OF THE DRAWINGS

Illustrative embodiments of the invention are shown in the appended drawings, in which:
- Fig. 1: shows in perspective view part of a conveyor according to the invention provided with a deflecting device and in which the conveyor chain is supported in profiled elements,
- Fig. 2: shows a link of the conveyor chain viewed from above,
- Fig. 3: shows the link in Figure 2 viewed from the front,
- Fig. 4: shows in cross section the profiled girder in the conveyor in Figure 1 provided with an embodiment of a slide rail according to the invention, on the upper flange/guide located to the right in the figure,
- Fig. 5: shows in diagrammatic, partially cut cross section half of the profiled girder together with chain links and slide rails according to the invention,

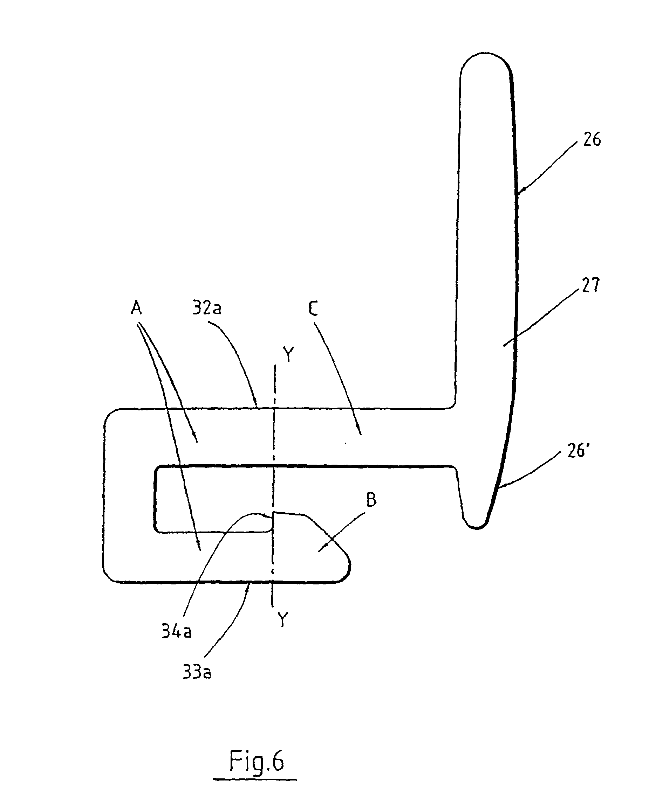

- Fig. 6: shows a slide rail according to the invention constructed in one piece with an edging, and
- Fig. 7: shows in perspective view a slide rail without an edging.

### DESCRIPTION OF PREFERRED EMBODIMENTS

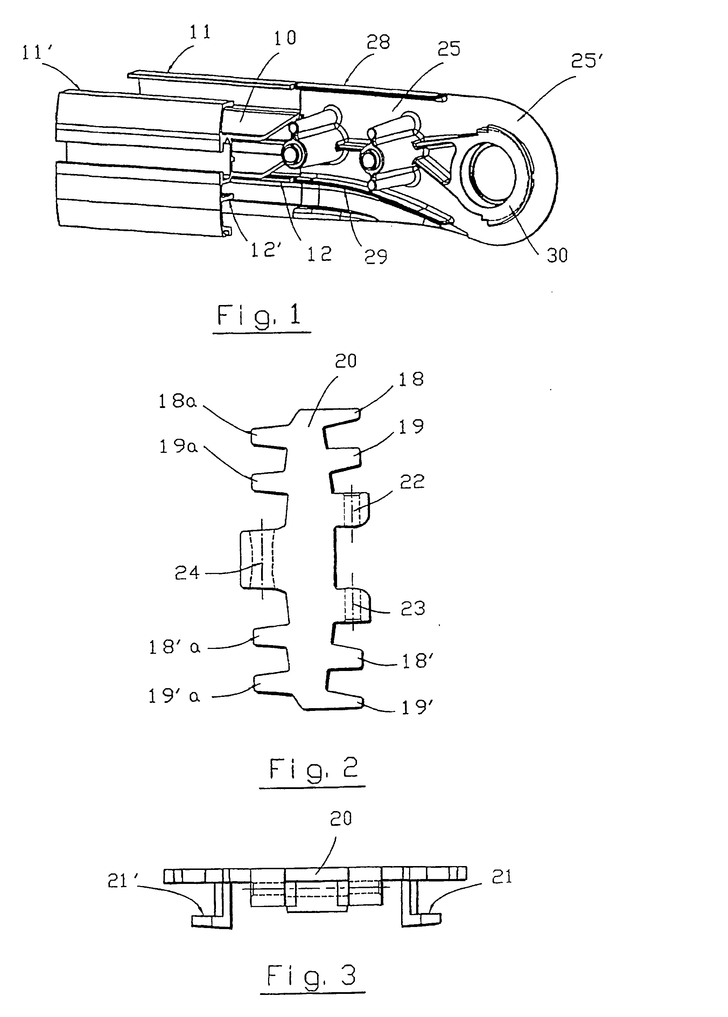

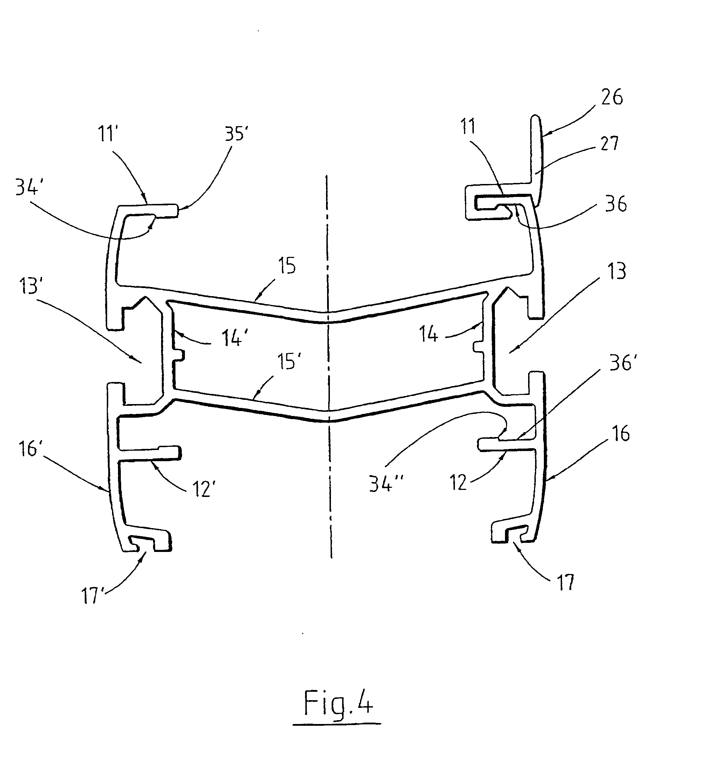

In Figure 1 is shown part of a profiled girder 10, which can be of any chosen length and which is extruded from, preferably, aluminium in the form of a straight girder. (Curved girders or corresponding construction elements with corresponding profile in cross section are also obviously found.) The structure of this girder can be seen from Figure 4. As is evident from the figure, the girder is symmetrical about its vertical centre plane c-c and has a pair of mutually opposing flanges 11, 11' forming a first supporting and steering upper tramway for the conveyor chain. The girder also has a pair of mutually opposing flanges 12, 12' forming a second supporting and steering lower tramway for the conveyor chain. The girder additionally has, along each long side, longitudinal recesses or grooves 13, 13', which are each delimited on the inside by webs 14, 14' standing vertically in the figure. These webs 14, 14' form together with webs 15, 15', which run essentially horizontally and are angled in the figure, a rotationally rigid and strong girder construction. The essentially vertical walls 16, 16' of the girder, as shown in Figure 4, are closed off at the bottom by longitudinal grooves 17, 17', in which transverse clamps or the like can be secured, for example for the fastening of legs to support the conveyor or a plate covering the bottom side of the girder.

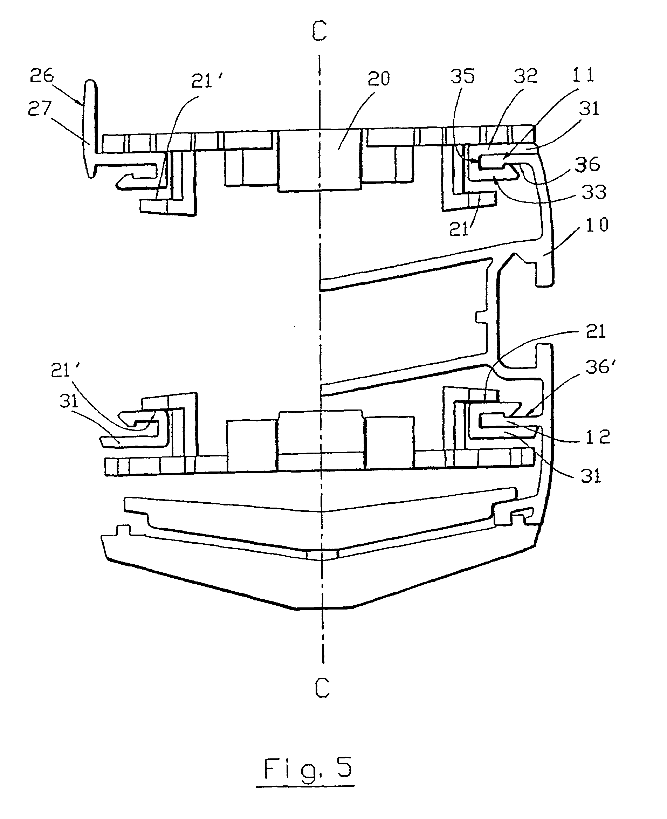

Bearing upon the upper flanges/the first guide 11, 11' on the profiled girder (as shown diagrammatically in Fig. 5), via a slide rail 27 provided with an edging 26, are the respective outer ends 18, 19, 18a, 19a; 18', 19', 18'a, 19'a of a chain link 20 shown in Figures 2 and 3.

On the lower flanges/the second guide 12, 12' on the profiled girder the foot-like elements 2.1, 21' of the chain link 20 are supported in the lower strand of the conveyor chain, i.e. after the motional direction for the chain has been reversed from a first direction along the guide 11, 11' to an opposite direction along the guide 12, 12'. Individual chain links 20 have bores 22, 23, 24 intended to receive pins which flexibly hold together individual links in the plane of the chain as well as perpendicularly thereto.

In Figure 1 is diagrammatically shown a wall element 25 forming part of a deflecting device in the conveyor. The wall element is produced in one piece, preferably by casting of aluminium or another light metal. As can be seen from Figure 1, the extent of the wall element 25 in the vertical direction essentially corresponds to that of the profiled girder 10. In one piece with the wall element there is configured a connecting piece (not shown in the figures) having a cross section essentially corresponding to that of the groove 13, 13' in the profiled girder and having fastening holes (not shown in the figures) intended to receive screws for tightening against corresponding webs 14, 14' on the profiled girder. The wall element 25 has an upper flange 28, which, in mounted state, constitutes an essentially direct extension of the flange 11. Correspondingly, a flange 29 is present at the bottom of the wall element 25 and this flange, in mounted state, constitutes an essentially direct extension of the lower flange/the first guide 12. Both these flanges 28, 29 are constructed in one piece with the wall element 25 and form part of a third guide in the deflecting device 25.

On the inside of the wall element 25 there is configured in one piece with the wall element a part-circular fixture arrangement 30. This fixture arrangement is intended to support immovably a guide/slide element according to the description. The guide/slide element which can be fixed to the fixture device 30 forms together with the flanges 28, 29, and slide rails according to the present invention which are applied thereto, a third guide for the conveyor chain, i.e. a guide in which the motional direction of the chain is turned from a first direction to the opposite direction.

In Figure 5 are shown two different types of slide rails 27, 31.

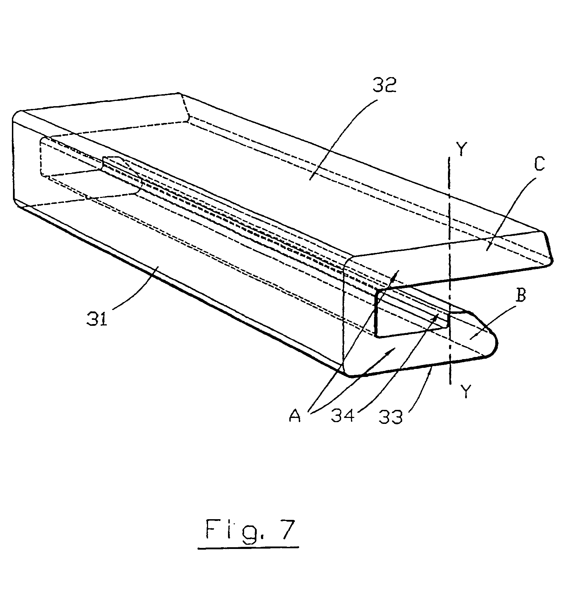

The rail 31 has a longitudinal section A (Fig. 7, to the left of the plane marked y-y) of essentially U-shaped cross section and having a distance between the arms 32, 33 of the U up to a locking lug 34 essentially equal to the thickness of the longitudinal end 35 of the flange 11, which end, in the figure, is facing towards the centre plane of the profiled girder. In the flange 11 (as in other flanges) there is a longitudinal recess 36, configured on the bottom side of the flange. Corresponding recesses 36' are present on the top sides of the lower flanges 12, 12' on the profiled girder. Each recess forms a lug or bearing surface which is complementary to the locking lug 34, for example the lug 34' in Fig. 4, at a distance from the respective flange end 35, 35' corresponding to the distance along the arms 32, 33 of the slide rail from the base of the U to the locking lug 34.

According to Figure 5, the arm 33 of the section A of U-shaped cross section and the longitudinal part B of superior thickness which is linked thereto are arranged for application against the bottom side of the respective upper flanges 11, 11' on the profiled element. The base of the slide rail 32, which slide rail is of U-shaped cross section in the section A, encloses the end 35 of the flange and the other arm 32 of the slide rail, and a part C which broadens the latter arm rests on the top side of the upper flange 11 and forms a flat longitudinal slide surface for corresponding cogs 18, 19; 18a, 19a on the chain links.

The slide rails 31 applied to the lower flanges 12, 12' on the profiled element are guided up and down in relation to the slide rails on the upper flanges 11, 11'. For the return motion of the continuous conveyor chain, the flat outsides of the respective arms 33 and the outsides, coupled thereto, of the respective parts B hereupon form slide surfaces for the foot-like elements 21 of the chain links 20.

From Figure 5 it can be seen that the arm 32 and the part C which is integrated therewith are somewhat longer than the arm 33 and the part B linked thereto. The length is tailored to connect the slide rail softly to the outer contour of the profiled girder 10.

In order further to improve the fixing of the slide rails to the upper flanges 11, 11' of the profiled girder 10, however, according to another embodiment of the invention the rail shown in Figure 7 is further refined to comprise an edging 26 constructed in one piece therewith. This edging 26 is closed off at the bottom with a lug 26', which is dimensioned to grip the profiled element 10 externally as shown in Figure 4.

In the interaction afforded by the lug 26' and the locking lug 34 on the slide rail, enhanced fixing of the slide rail against displacement in the direction of the centre plane of the profiled girder is obtained. In addition, the edging can effectively be used for the guidance of objects advanced on the conveyor chain. Edged slide elements can be present on both the upper flanges 11, 11' or, should a profiled element in the conveyor be curved, the edged slide rail can be applied along the outer groove of the curve in question and can there constitute an effective guide for the transported objects at the same time as the slide rail is held securely fixed against displacement.

The slide rails according to the invention in the shown embodiments and other equivalent embodiments are extruded or injection-moulded in one piece of friction-reducing material, which is preferably chosen such that the finished rails acquire an elastically resilient flexibility, at least in the region of the said U. Even though the invention has been described in the form of illustrative embodiments according to the drawings, it will be appreciated that modifications and equivalent detailed configurations lie within the scope of the appended patent claims.

## Claims

1. Slide rail device comprising at least one girder (10) and upper and lower flanges (11, 11';12, 12') for supporting and guiding a conveyor which has a continuous conveyor chain driven by a drive device in a conveyor track, said upper and lower flanges being arranged from mutually opposing profile sides in towards the centre of the profile and running parallel with the girder direction, on the at least one profiled girder (10) provided with slide rails each slide rail (31; 27) having a section (A) of essentially U-shaped cross section extending in the longitudinal direction of the slide rail, the one arm (33; 33a) of the said section having a longitudinal part (B), constructed in one piece therewith, **characterized in that** the said one arm has a locking lug (34; 34a) extending in the longitudinal direction of the slide rail, and **in that** the corresponding flange (11, 11'; 12, 12') on the profiled girder (10) has a recess (36; 36') extending in the longitudinal direction of the flange and having a complementary lug (34'; 34") preventing displacement of the locking lug (34; 34a) and slide rail (31; 27) in towards the centre plane of the profiled girder.

2. Slide rail device according to Claim 1, **characterized in that** the said longitudinal part (B) has superior thickness to the said one arm (33, 33a).

3. Slide rail device according to Claim 2, **characterized in that** the said longitudinal part (B) is configured on the end of the said one arm (33, 33a) and **in that** the arm and the said longitudinal part form an essentially rectangular transition (34; 34a) on the inside of the arm in towards the base of the U.

4. Slide rail device according to Claim 3, **characterized in that** the said essentially rectangular transition (34; 34a) lies at a distance from the base of the U, which distance essentially corresponds to the distance between that end of the upper flange (11, 11') facing towards the centre plane of the profiled girder and the said displacement-preventing bearing surface (34") of a recess (36) on the bottom side of the said upper flange and, respectively, a said displacement-preventing girder lug (34") of a recess (36') on the top side of the said lower flange (12, 12').

5. Slide rail device according to Claim 4, **characterized in that** the slide rail (31; 27) is made of material which makes the arms able to swing out such that they return flexibly into position and **in that** the distance between the arms essentially corresponds to the thickness of the respective flange (11, 11'; 12, 12') from the inner end (35) thereof to the position of the said rectangular transition (34'; 34").

6. Slide rail device according to Claim 5, **characterized in that** each slide rail, in addition to the said essentially U-shape-forming section (A), has a part (C) which extends the other arm (32, 32a) of the said section and which, together with the said other arm, is dimensioned to cover the top side and bottom side respectively of a corresponding upper (11, 11') and lower (12, 12') flange respectively on the profiled girder.

7. Slide rail device according to Claim 6, **characterized in that** the slide rails (27), which are intended to be applicable to at least one flange in a mutually opposing pair of upper flanges (11, 11'), each have an edging (26) constructed in one piece therewith and extending essentially perpendicularly to the said extending part (C), and perpendicularly to the conveyor chain in mounted state along the entire length thereof, around the outside of the said upper flanges (11, 11').

8. Slide rail device according to Claim 7, **characterized in that** the part forming the edging (26) is closed off at the bottom by a lug (27") dimensioned to grip the profiled girder externally.

9. Slide rail device according to Claim 8, **characterized in that** the slide rails for the upper flanges and lower flanges respectively on the profiles are extruded in one piece of friction-reducing material, which gives the finished rails elastically resilient flexibility, at least in the region of the said U.

## Patentansprüche

1. Gleitschienenvorrichtung mit wenigstens einem Träger (10) und oberen und unteren Flanschen (11, 11'; 12, 12') zum Tragen und Führen eines Fördermittels, welches eine durchgehende Förderkette aufweist, welche mittels einer Antriebseinrichtung in einer Förderbahn angetrieben wird, wobei die oberen und unteren Flansche auf dem wenigstens einen mit Gleitschienen ausgestatteten profilierten Träger (10) von wechselseitig gegenüberliegenden Profilseiten in Richtung der Mitte des Profils weisend angeordnet sind und parallel zu der Trägerrichtung verlaufen, wobei jede Gleitschiene (31; 27) einen Abschnitt (A) mit einem im wesentlichen U-förmigem Querschnitt aufweist, der sich in Längsrichtung der Gleitschiene erstreckt, wobei ein Arm (33; 33a) des Abschnitts ein Längsteil (B) aufweist, welches einteilig damit ausgebildet ist,
**dadurch gekennzeichnet,**
**dass** der eine Arm eine Verriegelungsnase (34; 34a) aufweist, die sich in Längsrichtung der Gleitschiene erstreckt; und
**dass** der entsprechende Flansch (11, 11'; 12, 12') auf dem profilierten Träger (10) eine Ausnehmung (36; 36') aufweist, welche sich in Längsrichtung des Flansches erstreckt und welche eine komplementäre Nase (34'; 34'') zum Verhindern einer Verschiebung der Verriegelungsnase (34; 34a) und der Gleitschiene (31; 27) in Richtung der Mittelebene des profilierten Trägers aufweist.

2. Gleitschienenvorrichtung nach Anspruch 1, **dadurch gekennzeichnet, dass** das Längsteil (B) eine größere Dicke als der eine Arme (33, 33a) aufweist.

3. Gleitschienenvorrichtung nach Anspruch 2, **dadurch gekennzeichnet, dass** das Längsteil (B) auf dem Ende des einen Arms (33, 33a) gebildet ist, und dass der Arm und das Längsteil einen im wesentlichen rechteckigen Übergang (34; 34a) auf der Innenseite des Arms in Richtung der Basis des U's bilden.

4. Gleitschienenvorrichtung nach Anspruch 3, **dadurch gekennzeichnet, dass** der im wesentlichen rechteckige Übergang (34; 34a) von der Basis des U's beabstandet ist, wobei der Abstand im wesentlichen jeweils dem Abstand zwischen dem Ende des oberen Flansches (11, 11'), der in Richtung der Mittelebene des profilierten Trägers zeigt, und der Lagerfläche (34'') einer Ausnehmung (36) auf der Unterseite des oberen Flansches zum Verhindern einer Verschiebung und einer Trägernase (34'') einer Ausnehmung (36') auf der Oberseite des unteres Flansches (12, 12')zum Verhindern einer Verschiebung entspricht.

5. Gleitschienenvorrichtung nach Anspruch 4, **dadurch gekennzeichnet, dass** die Gleitschiene (31; 27) aus einem Material hergestellt ist, welches den Armen ermöglicht, derart aufzuklappen, dass sie flexibel in ihre Stellung zurückkehren, und dass der Abstand zwischen den Armen im wesentlichen der Dicke des jeweiligen Flansches (11, 11'; 12, 12') von dem inneren Ende (35) davon zu der Position des rechtwinkligen Übergangs (34'; 34' ') entspricht.

6. Gleitschienenvorrichtung nach Anspruch 5, **dadurch gekennzeichnet, dass** jede Gleitschiene zusätzlich zu dem im wesentlichen U-förmig geformten Abschnitt (A) ein Teil (C) aufweist, welches den anderen Arm (32, 32a) des Abschnitts verlängert und welches zusammen mit dem anderen Arm zum jeweiligen Abdecken der Oberseite und der Unterseite eines zugeordneten oberen Flansches (11, 11') und eines unteren Flansches (12, 12') jeweils auf dem profilierten Träger dimensioniert ist.

7. Gleitschienenvorrichtung nach Anspruch 6, **dadurch gekennzeichnet, dass** die Gleitschienen (27), welche an wenigstens einem Flansch in einem wechselseitig gegenüberliegenden Paar an oberen Flanschen (11, 11') angebracht werden sollen, jeweils eine Ecke (26) aufweisen, welche einteilig damit ausgebildet ist und sich im wesentlichen senkrecht zu dem sich erstreckenden Teil (C) und senkrecht zu der Förderkette im montierten Zustand entlang der gesamten Länge davon, um die Außenseite der oberen Flansche (11, 11') herum erstreckt.

8. Gleitschienenvorrichtung nach Anspruch 7, **dadurch gekennzeichnet, dass** das die Ecke (27) bildende Teil an der Unterseite durch eine Nase (27") abgeschlossen ist, welche zum externen Greifen des profilierten Trägers dimensioniert ist.

9. Gleitschienenvorrichtung nach Anspruch 8, **dadurch gekennzeichnet, dass** die Gleitschienen jeweils für die oberen Flansche und die unteren Flansche auf den Profilen in einem Stück aus einem reibungsreduzierenden Material extrudiert sind, welches den fertiggestellten Schienen eine elastische, biegsame Flexibilität verleiht, wenigstens in dem Bereich des U's.

## Revendications

1. Dispositif de rail de glissement comportant au moins une poutre (10) et des rebords supérieurs et inférieurs (11, 11 ; 12, 12') pour supporter et guider un convoyeur qui a une chaîne de convoyeur continu entraînée par un dispositif d'entraînement dans une piste de convoyeur, lesdits rebords supérieurs et inférieurs étant agencés à partir de côtés d'un profilé mutuellement opposés en direction du centre du profilé et s'étendant parallèlement à la direction de poutre, sur la au moins une poutre profilée (10) munie de rails de glissement, chaque rail de glissement (31 ; 27) ayant un tronçon (A) de section transversale sensiblement en forme de U s'étendant dans la direction longitudinale du rail de glissement, le premier bras (33 ; 33a) dudit tronçon ayant une partie longitudinale (B) , construite en un seul bloc avec celui-ci, **caractérisé en ce que** ledit premier bras a un téton de blocage (34 ; 34a) s'étendant dans la direction longitudinale du rail de glissement, et **en ce que** le rebord correspondant (11, 11 ; 12, 12') sur la poutre profilée (10) a un évidement (36 ; 36') s'étendant dans la direction longitudinale du rebord et ayant un téton complémentaire (34 ; 34") empêchant un déplacement du téton de blocage (34 ; 34a) et du rail de glissement (31 ; 27) en direction du plan central de la poutre profilée.

2. Dispositif de rail de glissement selon la revendication 1, **caractérisé en ce que** ladite partie longitudinale (B) a une épaisseur supérieure audit premier bras (33, 33a).

3. Dispositif de rail de glissement selon la revendication 2, **caractérisé en ce que** ladite partie longitudinale (B) est configurée sur l'extrémité dudit premier bras (33, 33a) et **en ce que** le bras et ladite partie longitudinale forment une transition sensiblement rectangulaire (34 ; 34a) sur l'intérieur du bras en direction de la base du U.

4. Dispositif de rail de glissement selon la revendication 3, **caractérisé en ce que** ladite transition sensiblement rectangulaire (34 ; 34a) se situe à une certaine distance par rapport à la base du U, laquelle distance correspond sensiblement à la distance entre cette extrémité du rebord supérieur (11, 11') dirigée en direction du plan central de la poutre profilée et ladite surface d'appui empêchant un déplacement (34") d'un évidement (36) situé sur le côté inférieur dudit rebord supérieur et, respectivement, ledit téton de poutre empêchant un déplacement (34") d'un évidement (36') situé sur le côté supérieur dudit rebord inférieur (12, 12').

5. Dispositif de rail de glissement selon la revendication 4, **caractérisé en ce que** le rail de glissement (31 ; 27) est constitué d'un matériau qui permet aux bras de pivoter de sorte qu'ils retournent de manière souple en position et **en ce que** la distance entre les bras correspond sensiblement à l'épaisseur du rebord respectif (11, 11 ; 12, 12') à partir de son extrémité intérieure (35) jusqu'à la position de ladite transition rectangulaire (34 ; 34").

6. Dispositif de rail de glissement selon la revendication 5, **caractérisé en ce que** chaque rail de glissement, en plus dudit tronçon ayant une forme sensiblement en U (A), a une partie (C) qui prolonge l'autre bras (32, 32a) dudit tronçon et qui, en association avec ledit autre bras, est dimensionnée pour couvrir le côté supérieur et le côté inférieur respectivement d'un rebord supérieur (11, 11') et d'un rebord inférieur (12, 12') correspondants respectivement sur la poutre profilée.

7. Dispositif de rail de glissement selon la revendication 6, **caractérisé en ce que** les rails de glissement (27), qui sont prévus pour pouvoir être appliqués sur au moins un rebord dans une paire mutuellement opposée de rebords supérieurs (11, 11'), chacun ayant une bordure (26) construite en un seul bloc avec celui-ci et s'étendant de manière sensiblement perpendiculaire à ladite partie de prolongement (C), et perpendiculairement à la chaîne de convoyeur à l'état monté le long de toute la longueur de celle-ci, autour de l'extérieur desdits rebords supérieurs (11, 11').

8. Dispositif de rail de glissement selon la revendication 7, **caractérisé en ce que** la partie formant la bordure (26) est bloquée au niveau du fond par un téton (27") dimensionné pour saisir extérieurement la poutre profilée.

9. Dispositif de rail de glissement selon la revendication 8, **caractérisé en ce que** les rails de glissement pour les rebords supérieurs et les rebords inférieurs respectivement situés sur les profilés sont extrudés en un seul bloc de matériau réduisant le frottement, en donnant ainsi aux rails finis une souplesse résiliente de manière élastique, au moins dans la zone dudit U.
